# FASCICULE DE BREVET EUROPEEN

(11) **EP 0 448 445 B1**
(45) Date de publication et mention de la délivrance du brevet: **13.01.1999**
(21) Numéro de dépôt: 91400674.7
(22) Date de dépôt: 12.03.1991
(51) Int. Cl.: C07F 5/06, C07F 9/54, B01F 1/00, C08F 2/00

(54) **Composition liquide non-aqueuse à caractère ionique et son utilisation comme solvant**
Flüssige nichtwässerige ionische Zusammensetzung und ihre Verwendung als Lösungsmittel
Liquid non-aqueous composition with an ionic character and its use as a solvent

(30) Priorité: 20.03.1990 FR 9003651
(43) Date de publication de la demande: 25.09.1991
(73) Titulaire: INSTITUT FRANCAIS DU PETROLE, 92502 Rueil-Malmaison (FR)
(72) Inventeur: Chauvin, Yves, F-78230 Le Pecq (FR); Commereuc, Dominique, F-92190 Meudon (FR); Guibard, Isabelle, F-92500 Rueil Malmaison (FR); Hirschauer, André, F-78360 Montesson (FR); Olivier, Hélène, F-92500 Rueil Malmaison (FR); Saussine, Lucien, F-78290 Croissy sur Seine (FR)

(56) Documents cités:
- DE-A- 1 493 170
- DE-B- 1 187 380
- FR-A- 1 461 819
- FR-A- 1 549 177
- US-A- 4 024 170
- CHEMICAL ABSTRACTS, vol. 62, 1965, Columbus, OH (US); K. INAGAKI et al., AN 13267h
- CHEMICAL ABSTRACTS, vol. 64, 1966, Columbus, OH (US); K. INAGAKI et al., AN 5226g

## Description

La présente invention concerne une composition liquide non aqueuse à caractère ionique résultant de la mise en contact d'au moins un dihalogénure d'alcoylaluminium avec au moins un halogénure d'ammonium quaternaire ou/et au moins un halogénure de phosphonium quaternaire, ladite composition étant liquide en dessous de 80 °C environ et, de préférence, aux températures inférieures ou égales à 40 °C environ.

La présente invention a également pour objet l'utilisation de ladite composition liquide comme solvant (de catalyseurs notamment).

On ne connait que peu de compositions ioniques non aqueuses, liquides en dessous de la température ambiante et dont un des constituants est soluble dans les hydrocarbures aliphatiques. Les plus étudiées sont formées par le mélange de trichlorure ou de tribromure d'aluminium avec des chlorures ou bromures de N-alkylpyridinium et de N,N′ - dialkyl imidazolium. Ces compositions ioniques liquides sont appelées "sels fondus" (C.H. HUSSEY, Advances in Molten Salts Chemistry, vol.5, p. 185, Elsevier, New-York, 1983).

Il a également été décrit dans le brevet français 2611700 l'utilisation de ces sels fondus en tant que solvants et co-catalyseurs pour la réaction de dimérisation ou de co-dimérisation d'oléfines catalysée par des complexes cationiques du nickel comprenant une liaison nickel-carbone ou nickel-hydrogène.

Il a maintenant été trouvé que la mise en contact (dans un ordre quelconque) d'au moins un dihalogénure (par exemple un dichlorure ou un dibromure) d'alcoylaluminium avec au moins un halogénure (par exemple un chlorure ou un bromure) d'ammonium quaternaire ou/et au moins un halogénure (par exemple un chlorure ou un bromure) de phosphonium quaternaire, et, éventuellement, avec en outre au moins un trihalogénure d'aluminium (par exemple un trichlorure ou un tribomure d'aluminium), conduit à une composition liquide non-aqueuse à caractère ionique, ladite composition étant liquide en-dessous de 80 °C environ (par exemple entre environ -70 °C et environ +80 °C), de préférence aux températures inférieures ou égales à 40 °C environ (par exemple entre environ -70 °C et environ +40 °C) et, de manière encore plus préférée, aux températures inférieures ou égales à -20 °C environ (par exemple entre environ -70 °C et environ -20 °C). De plus, ladite composition liquide est stable dans le temps.

Le brevet FR-1.461.819 décrit un mélange de composé Mₑ Xₘ Rₙ avec un sel 〈〈 onium quaternaire 〉〉 N(ouP) R₁ R₂R₃R₄X, Mₑ représentant Al ; X un halogène; R un alkyl C1-C6 ; R1, R2, R3 ou R4 étant un reste hydrocarbure, met n étant égaux à 0, 1, 2 ou 3. Le mélange obtenu est utilisé comme électrolyte.

Dans le brevet FR-1.549.177, un procédé de dimérisation opère en phase homogène, en présence de AlRX₂, X étant un halogène et R un reste hydrocarboné, et avec un catalyseur. Le catalyseur résulte du mélange d'un composé d'un métal de transition avec un complexe de formule RPX₄ - AlX₃ dans lequel RPX₄ est un tétrachlorophosphite dérivant de l'acide tétrachloro-orthophosphooreux, c'est-à-dire un dérivé anionique.

On peut également citer les documents (1) Chemical Abstracts, Vol. 64, 1966, colonne 5226g et (2) Chemical Abstracts, Vol. 62, 1965, colonne 13267g-h qui décrivent des mélange EtAlCl₂ avec Et₄PCl pour (1) et pour former un produit solide Et₅PAlCl₃, et avec Et₃PCl₂ pour (2).

Un objet de la présente invention est une composition contenant un catalyseur et un solvant dudit catalyseur, dans laquelle ledit solvant est une composition liquide non aqueuse à caractère ionique résultant de la mise en contact d'au moins un dihalogénure d'alcoylaluminium avec au moins un halogénure d'ammonium quaternaire ou/et au moins un halogénure de phosphonium quaternaire, ladite composition étant liquide endessous de -80 °C environ, composition dans laquelle ledit halogénure d'ammonium quaternaire et ledit halogénure de phosphonium quaternaire répondent respectivement aux formules générales NR1R2R3R4X et PR1R2R2R4X, où X représente un halogène choisi parmi le chlore de brome, R1, R2, R3 et R4, identiques ou différents, représentent chacun un groupement alcoyle comprenant 1 à 12 atomes de carbone ou R1 et R2 forment ensemble un reste alkylène de 4 à 10 atomes de carbone, R3 et R4, identiques ou différents, représentent chacun un groupe alcoyle comprenant 1 à 12 atomes de carbone, ou bien ledit halogénure d'ammonium quaternaire et ledit halogénure de phosphonium quaternaire sont formés d'au moins un hétérocycle respectivement azoté ou phosphoré comportant 1, 2 ou 3 atomes respectivement d'azote ou de phosphore.

Les dihalogénures d'alcoylaluminium utilisables dans le cadre de l'invention répondent de préférence à la formule générale Al₂X₄R₂ où chaque X représente un halogène, choisi par exemple parmi le chlore et le brome, chaque R représente un reste hydrocarbyl comprenant 1 à 12 atomes de carbone, aromatique ou aliphatique, à chaîne ramifiée ou linéaire. A titre d'exemples de tels composés, on peut citer le dichlorométhylaluminium (nom commun du tétrachlorodiméthyldialuminium de formule Al ₂Cl₄(CH₃) ₂), le dibromométhylaluminium (Al₂Br₄(CH₃) ₂), le dichloroéthylaluminim, le dibromoéthylaluminium, le dichloro n-hexylaluminium, le dichloroisobutylaluminium. On peut utiliser un ou plusieurs de ces composés.

Les halogénures d'ammonium quaternaire et les halogénures de phosphonium quaternaire utilisables dans le cadre de l'invention répondent de préférence aux formules générales respectives NR₁R₂R₃R₄X, et PR₁R₂R₃R₄X, ou X représente un halogène, choisi par exemple parmi le chlore et le brome, R_{1,} R₂, R₃ et R₄, identiques ou différents, représentant chacun un groupement alcoyle aliphatique (saturé ou insaturé) ou aromatique, comprenant 1 à 12 atomes de carbone. Ces groupements R_{1,} R₂, R₃ et R₄ peuvent également former un cycle avec l'atome d'azote ou de phosphore; ainsi R_{1,} et R₂ peuvent former ensemble un reste alkylène de 4 à 10 atomes de carbone, R₃ et R₄ étant définis comme précédemment. Les halogénures d'ammonium et les halogénures de phosphonium peuvent être formés d'au mois un hétérocycle azoté ou phosphoré comportant 1, 2 ou 3 atomes d'azote ou de phosphore. A titre d'exemples d'halogénures d'ammonium ou de phosphonium, on peut citer le chlorure de tétrabutylphosphonium, le bromure de tétrabutylphosphonium, le chlorure de N-butylpyridinium, le bromure d'éthylpyridinium, le chlorure de méthyl-1 butyl-3 imidazolium, le chlorure de méthyl-1 éthyl-3 imidazolium. On peut utiliser un ou plusieurs de ces composés.

Les composés entrant dans la composition selon l'invention peuvent être mélangés dans un ordre quelconque. Le mélange peut se faire par une simple mise en contact desdits composés suivie d'une agitation, jusqu'à obtention d'une phase liquide homogène (c'est-à-dire la composition liquide selon l'invention). Le mélange peut aussi se faire avantageusement en présence d'un solvant hydrocarboné aliphatique saturé qui dissout par exemple le(s) dihalogénure(s) d'alcoylaluminium ; dans ce cas, après obtention de deux phases liquides limpides, la phase surnageante constituée essentiellement du solvant hydrocarboné est éliminée afin de ne laisser subsister que la composition liquide selon l'invention.

Les proportions relatives des composés entrant dans la composition selon l'invention dépendent des propriétés souhaitées, tant chimiques que physiques, pour la composition selon l'invention. Quand le nombre N₁ des moles du ou des dihalogénures d'alcoylaluminium, et éventuellement, du ou des trihalogénures d'aluminium, compté en équivalents d'atomes d'aluminium, est égal au nombre N₂ de moles du ou des halogénures d'ammonium quaternaire ou/et du ou des halogénures de phosphonium quaternaire, compté en équivalents d'atomes d'halogénures, la composition liquide obtenue est dite "neutre" ; si N₁ est supérieur à N₂, la composition liquide obtenue est dite "acide" ; si N₁ est inférieur à N₂, la composition liquide obtenue est dite "basique".

Les compositions liquides (ou "sels fondus") selon la présente invention peuvent être utilisées comme solvants (de catalyseurs notamment).

Ainsi, on peut dissoudre dans ces "sels fondus" des complexes de métaux de transition cationiques, tels que [Cr(C₆H₅)₂]⁺ , [Re(CO)₅(NS)]²⁺,[Fe(fulvène)₂]²⁺, [Ru(CH₃CN)₃(C₆H₆)]²⁺ , [Ru(arène)]²⁺ , [(C₅H₅)Rh(C₆H₆)]²⁺, anioniques, tels que [NiBr₃P(C₆H₅)₃]⁻ , ou neutres, tels que Ni(C₅H₇O₂)₂ (l'acétylacétonate de nickel), (NiCl₂.2pBu₃) . Les complexes neutres peuvent se trouver transformés alors en complexes de nature anionique dans les "sels fondus" basiques et cationique dans les "sels fondus" acides ; ainsi, l'acétylacétonate de nickel introduit dans le "sel fondu" basique liquide constitué de 1 mole de chlorure de méthyl-1 butyl-3 imidazolium et de 0,9 mole de dichloroéthylaluminium est transformé quantitativement en complexe [NiCl₄] ²⁻.

Les compositions liquides (ou "sels fondus") selon l'invention peuvent également servir de solvants de catalyseurs, par exemple de catalyseurs à base de complexes de métaux de transition, notamment de dimérisation, de co-dimérisation ou d'oligomérisation tels que des complexes du nickel. Dans ce cas, l'utilisation des complexes n'est plus limitée, comme dans le brevet français 2611700, aux complexes comportant déjà au moins une liaison métal de transition-carbone ou métal de transition-hydrogène ou aux complexes de bas degré d'oxydation, mais à la majeure partie des complexes.

Ainsi, les catalyseurs utilisables, dans une composition liquide (ou "sel fondu") selon l'invention, pour la dimérisation, la co-dimérisation ou l'oligomérisation d'oléfines sont des complexes quelconques du nickel, mis à part les complexes du nickel solvatés par des composés à protons actifs tels que l'eau, les alcools, les acides organiques, l'ammoniac. A titre d'exemples de tels complexes pour lesdites réactions, on peut citer l'acétylacétonate de nickel, les complexes des halogénures ou du sulfate de nickel tels que (NiCl₂, 2 pyridine), (NiCl₂, 2PiPr₃) , (NiBr₂, 2PBu₃), (NiSO₄, 2PBu₃), l'octoate de nickel, les alcoolates de nickel. On peut aussi utiliser les composés du nickel décrits dans le brevet français 2611700, qui comportent au moins une liaison nickel-carbone ou nickel-hydrogène, ou qui sont à une valence inférieure à 2 ; à titre d'exemples de tels composés, on peut citer le biscyclooctadiène nickel, le chlorure de méthallylnickel, le bisallylnickel, le chlorure d'allylnickel, le bromure d'allylnickel.

La quantité de complexe(s) du nickel contenu(s) dans le "sel fondu" selon l'invention, pour la dimérisation, la co-dimérisation ou l'oligomérisation d'oléfines, est généralement comprise entre 0,01 m mole. 1⁻¹ et 2 moles.1⁻¹, de préférence entre 0,1 et 100 m moles. 1⁻¹; la proportion optimale dépend de la nature du complexe du nickel et de la composition du "sel fondu" selon l'invention. On se placera, de préférence, dans le domaine "acide" du "sel fondu" et on ajustera la quantité de complexe à l'excès de la fraction molaire de dihalogénure(s) d'alcoylaluminium contenu(s) dans le "sel fondu".

D'une manière générale, les oléfines susceptibles d'être dimérisées, co-dimérisées ou oligomérisées par le(s) catalyseur(s) contenu(s) dans un "sel fondu" selon l'invention sont les mêmes que celles qui sont dimérisées par les catalyseurs à base de nickel utilisés en milieu hydrocarboné ou halogénohydrocarboné, par exemple l'éthylène, le propylène, les butènes -1 et -2, le styrène. Pour effectuer la réaction, on met en contact l'oléfine avec la phase "sel fondu" contenant le(s) complexe(s) du nickel et on assure de préférence un transfert de phase efficace par une agitation énergique. A la fin de la réaction, on sépare les phases par tout moyen approprié ; par exemple on laisse décanter le mélange et on soutire la phase supérieure constituée des dimères, co-dimères et/ou oligomères. On peut alors recommencer l'opération par introduction d'une nouvelle charge d'oléfine(s). On peut aussi opérer en continu, c'est-à-dire alimenter le milieu en oléfine(s) et soutirer en continu la phase des dimères, co-dimères et/ou oligomères au fur et à mesure de leur formation en ayant soin de ménager, à l'intérieur ou à l'extérieur du réacteur, une zone permettant la décantation des deux phases liquides.

La température à laquelle se fait la réaction de dimérisation, de co-dimérisation ou d'oligomérisation, peut être aussi basse que le permettent la composition du "sel fondu" et l'activité du catalyseur, par exemple de -50 °C à +80 °C.

La pression est généralement maintenue entre 0,01 et 10 Mpa, les pressions élevées étant utilisées en particulier pour l'éthylène.

Comme pour les catalyseurs de nickel utilisés en solvant purement organique, on opère habituellement à l'abri de l'oxygène et de l'humidité.

Les exemples suivants illustrent l'invention sans toutefois en limiter la portée. On appellera "titre" de la composition liquide (ou "sel fondu"), la fraction molaire de composé(s) d'aluminium ; par exemple, une composition liquide contenant 0,5 mole de composé(s) d'aluminium pour 1 mole de la somme des constituants de ladite composition aura un titre de 0,5 N.

### EXEMPLE 1 Préparation d'une composition liquide selon l'invention.

Dans un tube de Schlenk purgé d'air et d'humidité, on introduit 9,74 g (33 mmoles) de PBu₄Cl (chlorure de tétrabutylphosphonium) et 15 ml d'heptane ; puis, après avoir refroidi la suspension à -20 °C, on ajoute 8 ml (6,46 g) d'une solution à 50 % en poids dans l'hexane de dichloroéthylaluminium (soit 25,4 milliéquivalents d'atomes d'aluminium). On réchauffe ensuite le mélange obtenu vers 30 °C.

On observe alors la formation de deux phases liquides limpides, la phase surnageante hydrocarbonée ne contenant pas de composé chloré et étant ensuite éliminée.

La phase liquide homogène inférieure est constituée d'une composition liquide à température ambiante dont le titre est de 0,43 N.

### EXEMPLE 2 Préparation d'une composition liquide selon l'invention.

Dans un tube de Schlenk purgé d'air et d'humidité, on introduit 8,38 g (48,1 mmoles) de chlorure de méthyl-1 butyl-3 imidazolium. Puis, après avoir refroidi la suspension à -20 °C, on ajoute 11,8 ml (9,56 g) d'une solution à 50 % en poids dans l'hexane de dichloroéthylaluminium (soit 37,6 milliéquivalents d'atomes d'aluminium). On réchauffe ensuite le mélange obtenu vers 30 °C.

On observe alors la formation de deux phases liquides limpides.

Après élimination de la phase surnageante hydrocarbonée, on recueille une composition liquide dont le titre est de 0,44 N et qui est encore liquide à -30 °C.

### EXEMPLE 3 Préparation d'une composition liquide selon l'invention.

Dans un tube de Schlenk purgé d'air et d'humidité, on introduit 2,23 g (7,55 mmoles) de PBu₄Cl et 15 ml d'heptane ; puis, après avoir refroidi la suspension à -20 °C, on ajoute 2,3 ml (1,84 g) d'une solution à 50 % en poids dans l'hexane de dichloroéthylaluminium (soit 7,1 milliéquivalents d'atomes d'aluminium). On réchauffe le mélange obtenu vers 30 °C.

On observe alors la formation de deux phases liquides limpides.

Après élimination de la phase surnageante hydrocarbonée, on recueille une composition liquide dont le titre de 0,66 N et qui est encore liquide à +30 °C.

### EXEMPLE 4 Préparation d'une composition liquide selon l'invention.

Dans un tube de Schlenk purgé d'air et d'humidité, on introduit 5,1 g (29,3 mmoles) de chlorure de méthyl-1 butyl-3 imidazolium. Puis, après avoir refroidi la suspension à -20 °C, on ajoute 7 ml (5,65 g) d'une solution à 50 % en poids dans l'hexane de dichloroéthylaluminium (soit 22,2 milliéquivalents d'atomes d'aluminium). On réchauffe ensuite le mélange obtenu vers 30 °C.

On observe alors la formation de deux phases liquides limpides.

Après élimination de la phase surnageante hydrocarbonée, on recueille une composition liquide dont le titre est de 0,60 N et qui est encore liquide à -50 °C.

### EXEMPLE 5 Test de dimérisation selon l'invention.

Dans un réacteur en acier de 250 ml, purgé d'air et d'humidité, on introduit 0,125 g (0,23 mmoles) du complexe (NiCl₂, 2PBu₃), 10 g d'heptane, puis 5 g d'une composition liquide formée de chlorure de tétrabutyl phosphonium et de dichloroéthylaluminium de titre 0,65 N.

Puis, on pressurise à 0,5 MPa de propylène et on porte le mélange à environ 60 °C.

Après deux heures d'agitation, on recueille 30 g d'oligomères du propylène constitués à 85 % d'isohexènes.

### EXEMPLE 6 Test de dimérisation selon l'invention.

Dans un réacteur en acier 250 ml, purgé d'air et d'humidité, on introduit 0,26 g (1,0 mmole) d'acétylacétonate de nickel anhydre, 9 g d'heptane, puis 5 g d'une composition liquide formée de chlorure de méthyl-1 butyl-3 imidazolium et de dichloroéthylaluminium de titre 0,64 N.

Puis, on pressurise à 0,5 MPa de propylène et on porte le mélange à environ 60 °C.

Après deux heures d'agitation, on recueille 9 g d'oligomères du propylène constitués à 82 % d'isohexènes.

### EXEMPLE 7

Dans un réacteur en verre à double enveloppe contenant un barreau aimanté, purgé d'air et d'humidité et maintenu à -15 °C, on introduit successivement 0,024 millimole du complexe (NiCl₂.2Pir₃), 3 ml d'heptane et 2 ml d'un sel fondu 0,7 N constitué du mélange de dichloroéthylaluminium et de chlorure de méthyl-1 butyl-3 imidazolium. On introduit alors du propylène gazeux à une pression voisine de la pression atmosphérique. Au bout de deux heures de réaction, on a formé 30 g de dimères dont 76 % étaient constitués de diméthyl-2,3 butènes.

## Revendications

1. Composition contenant un catalyseur et un solvant dudit catalyseur, dans laquelle ledit solvant est une composition liquide non-aqueuse à caractère ionique résultant de la mise en contact d'au moins un dihalogénure d'alcoylaluminium avec au moins un halogénure d'ammonium quaternaire ou/et au moins un halogénure de phosphonium quaternaire, ladite composition étant liquide en-dessous de 80°C environ, composition dans laquelle ledit halogénure d'ammonium quaternaire et ledit halogénure de phosphonium quaternaire répondent respectivement aux formules générales NR1R2R3R4X et PR₁R₂R₃R₄X, où X représente un halogène choisi parmi le chlore et le brome, R1, R2, R3 et R4, identiques ou différents, représentent chacun un groupement alcoyle comprenant 1 à 12 atomes de carbone ou R₁ et R₂ forment ensemble un reste alkylène de 4 à 10 atomes de carbone, R₃ et R₄, identiques ou différents, représentent chacun un groupe alcoyle comprenant 1 à 12 atomes de carbones, ou bien ledit halogénure d'ammonium quaternaire et ledit halogénure de phosphonium quaternaire sont formés d'au moins un hétérocycle respectivement azoté ou phosphoré comportant 1, 2 ou 3 atomes respectivement d'azote ou de phosphore.

2. Composition selon la revendication 1, ladite composition étant liquide aux températures inférieures ou égales à 40°C environ.

3. Composition selon l'une des revendications 1 et 2, ladite composition étant liquide entre environ - 70°C et environ + 40°C.

4. Composition selon la revendication 1, ladite composition étant liquide aux températures inférieures ou égales à - 20°C environ.

5. Composition selon l'une des revendications 1 et 4, ladite composition étant liquide entre environ - 70°C et environ - 20°C.

6. Composition selon l'une des revendications 1 à 5 dans laquelle ledit dihalogènure d'alcoylaluminium est un déchlorure ou un dibromure d'alcoylaluminium.

7. Composition selon l'une des revendications 1 à 5 dans laquelle ledit dihalogènure d'alcoylaluminium répond à la formule générale Al₂ X ₄R₂, où chaque X représente un halogène choisi parmi le chlore et le brome, chaque R représente un reste hydrocarbyl comprenant 1 à 12 atomes de carbone.

8. Composition selon la revendication 7 dans laquelle dihalogénure d'alcoylaluminium est choisi dans le groupe formé par le dichlorométhyloluminium, le dibromométhylaluminium, le dichloroéthylaluminium, le dichloro n-hexylaluminium, le dichloroisobutylaluminium.

9. Composition selon l'une des revendications 1 à 8 dans laquelle ledit halogénure d'ammonium quaternaire est un chlorure ou un bromure d'ammonium quaternaire et ledit halogénure de phosphonium quaternaire est un chlorure ou un bromure de phosphonium quaternaire.

10. Composition selon l'une des revendications 1 à 9 dans laquelle ledit halogénure d'ammonium quaternaire et ledit halogénure de phosphonium quaternaire sont choisis dans le groupe formé par le chlorure de tétrabutylphosphonium, le bromure de tétrabutylphosphonium, le chlorure de n-butylpyridinium, le bromure d'éthylpyridinium, le chlorure de méthyl-1 butyl-3 imidazolium, le chlorure de méthyl-1 éthyl-3 imidazolium.

11. Composition selon l'une des revendications 1 à 10, ladite mise en contact s'effectuant en présence d'un solvant hydrocarboné aliphatique saturé.

12. Composition selon l'une des revendications 1 à 11, dans laquelle les catalyseurs sont à base de complexes métaux de transition.

13. Composition selon l'une des revendications 1 à 12, dans laquelle le catalyseur est au moins un complexe du nickel.

14. Composition selon l'une des revendications 1 à 13, ladite mise en contact s'effectuant en outre avec au moins un trihalogénure d'aluminium.

15. Procédé de dimérisation, co-dimérisation ou oligomérisation d'au moins une oléfine dans lequel ladite oléfine est mise en contact d'une composition selon l'une des revendications 1 à 14.

16. Procédé selon la revendication 15, dans lequel la composition comprend un catalyseur qui est au moins un complexe du nickel, ledit complexe ne comportant ni de liaison nickel-carbone, ne de liaison nickel-hydrogène.

17. Procédé selon l'une des revendications 15 à 16 dans lequel ledit complexe du nickel est choisi dans le groupe formé par l'acétylacétonate de nickel, le complexe (NiCl₂, 2 pyridine), le complexe (NiCl₂, 2PiPr₃) le complexe (NiBr₂, 2PBu₃) le complexe (NiS0₄, ₂PBu₃), l'octoate de nickel, les alcoolats de nickel, le biscyclooctadiène nickel, le chlorure de méthallylnickel, le bisallylnickel le bromure d'allylnickel le chlorure d'allylnickel.

18. Procédé selon l'une des revendications 15 et 17 dans lequel la quantité de complexe(s) du nickel contenu (s) dans ladite composition liquide est comprise entre 0,01 m mole.l⁻¹ et 2 moles.l⁻¹.

19. Procédé selon l'une des revendications 15 à 18 dans lequel ladite oléfine est choisie parmi l'éthylène, le propylène, les butènes -1 et -2, le styrène.

## Claims

1. A composition containing a catalyst and a solvent for said catalyst, in which said solvent is a non-aqueous liquid composition with an ionic nature resulting from bringing at least one alkoylaluminium dihalide into contact with at least one quaternary ammonium halide and/or at least one quaternary phosphonium halide, said composition being liquid below about 80°C, in which composition said quaternary ammonium halide and said quaternary phosphonium halide respectively have the following general formulae: NR₁R₂R₃R₄X and PR₁R₂R₃R₄X, where X represents a halogen selected from chlorine and bromine, R₁, R₂, R₃ and R₄, which may be identical or different, each represent an alkoyl group containing 1 to 12 carbon atoms, or R₁ and R₂ together form an alkylene residue containing 4 to 10 carbon atoms, and R₃ and R₄, which may be identical or different, each represent an alkoyl group containing 1 to 12 carbon atoms, or said quaternary ammonium halide and said quaternary phosphonium halide are formed from at least one heterocycle, respectively containing nitrogen or phosphorous, respectively containing 1, 2 or 3 atoms of nitrogen or phosphorous.

2. A composition according to claim 1, in which said composition is liquid at temperatures of about 40°C or less.

3. A composition according to claim 1 or claim 2, in which said composition is liquid between about -70°C and about +40°C.

4. A composition according to claim 1, in which said composition is liquid at temperatures of about -20°C or less.

5. A composition according to any one of claims 1 to 4, in which said composition is liquid between about -70°C and about -20°C.

6. A composition according to any one of claims 1 to 5, in which said alkoylaluminium dihalide is an alkoylaluminium dichloride or dibromide.

7. A composition according to any one of claims 1 to 5, in which said alkoylaluminium dihalide has general formula Al₂X₄R₂, where each X represents a halogen selected from chlorine and bromine, and each R represents a hydrocarbyl residue containing 1 to 12 carbon atoms.

8. A composition according to claim 7, in which the alkoylaluminium dihalide is selected from the group formed by dichloromethylaluminium, dibromomethylaluminium, dichloroethylaluminium, dichloro-n-hexylaluminium and dichloroisobutylaluminium.

9. A composition according to any one of claims 1 to 8, in which said quaternary ammonium halide is a quaternary ammonium chloride or bromide and said quaternary phosphonium halide is a quaternary phosphonium chloride or bromide.

10. A composition according to claims 1 to 9, in which said quaternary ammonium halide and said quaternary phosphonium halide are selected from the group formed by tetrabutylphosphonium chloride, tetrabutylphosphonium bromide, n-butylpyridinium chloride, ethylpyridinium bromide, 1-methyl-3-butyl-imidazolium chloride and 1-methyl-3-ethyl-imidazolium chloride.

11. A composition according to any one of claims 1 to 10, in which said contact is made in the presence of a saturated aliphatic hydrocarbon-containing solvent.

12. A composition according to any one of claims 1 to 11, in which the catalysts are based on transition metal complexes.

13. A composition according to any one of claims 1 to 12, in which the catalyst is at least one nickel complex.

14. A composition according to any one of claims 1 to 13, in which in addition, said contact is made with at least one aluminium trihalide.

15. A process for dimerising, co-dimerising or oligomerising at least one olefin, in which said olefin is brought into contact with a composition according to any one of claims 1 to 14.

16. A process according to claim 15, in which the composition comprises a catalyst which is at least one nickel complex, said complex comprising neither a nickel-carbon bond nor a nickel-hydrogen bond.

17. A process according to claim 15 or claim 16, in which said nickel complex is selected from the group formed by nickel acetylacetonate, the complex (NiCl₂, 2pyridine), the complex (NiCl₂, 2PiPr₃), the complex (NiBr₂, 2PBu₃), the complex (NiSO₄, 2PBu₃), nickel octoate, nickel alcoholates, nickel bis-cyclooctadiene, methallyl nickel chloride, bisallyl nickel, allyl nickel bromide and allyl nickel chloride.

18. A process according to any one of claims 15 to 17, in which the quantity of nickel complex(es) contained in said liquid composition is in the range 0.01 mmole.l⁻¹ to 2 moles.l⁻¹.

19. A process according to any one of claims 15 to 18, in which said olefin is selected from ethylene, propylene, 1- and 2-butene, and styrene.

## Patentansprüche

1. Zusammensetzung, enthaltend einen Katalysator und ein Lösungsmittel für den besagten Katalysator, in der das besagte Lösungsmittel eine flüssige, nichtwässerige, ionische Zusammensetzung ist, die aus dem Kontakt zwischen mindestens einem Aluminiumdihalogenalkyl mit mindestens einem quartären Ammoniumhalogenid oder/und mindestens einem quartären Phosphoniumhalogenid resultiert, wobei die besagte Zusammensetzung unter circa 80° C flüssig ist, wobei in der besagten Zusammensetzung das besagte quartäre Ammoniumhalogenid und das quartäre Phosphoniumhalogenid jeweils den Summenformeln NR1R2R3R4X und PR₁R₂R₃R₄X entsprechen, wo X ein unter dem Chlor und dem Brom ausgesuchtes Halogen darstellt, R1, R2, R3, R4, ob identisch oder unterschiedlich, je eine Alkylgruppe mit 1 bis 12 Kohlenstoffatomen bedeuten oder R1 und R2 zusammen einen Alkylenrest mit 4 bis 10 Kohlenstoffatomen bilden, R3 und R4, ob identisch oder unterschiedlich, jeweils eine Alkylgruppe mit 1 bis 12 Kohlenstoffatomen darstellen, oder das besagte quartäre Ammoniumhalogenid und das besagte quartäre Phosphoniumhalogenid aus mindestens einer heterozyklischen Verbindung bestehen, die stickstoff- bzw. phosphorhaltig ist und 1, 2 oder 3 Atome Stickstoff bzw. Phosphor enthält.

2. Zusammensetzung nach Anspruch 1, wobei die besagte Zusammensetzung bei Temperaturen, die unter oder gleich circa 40° C liegen, flüssig ist.

3. Zusammensetzung nach einem der Ansprüche 1 oder 2, wobei die besagte Zusammensetzung bei Temperaturen, die zwischen circa - 70° C und circa + 40° C liegen, flüssig ist.

4. Zusammensetzung nach Anspruch 1, wobei die besagte Zusammensetzung bei Temperaturen, die unter oder gleich circa - 20 ° C liegen, flüssig ist.

5. Zusammensetzung nach einem der Ansprüche 1 bis 4, wobei die besagte Zusammensetzung zwischen circa -70° C und circa - 20° C flüssig ist.

6. Zusammensetzung nach einem der Ansprüche 1 bis 5, in der das besagte Aluminiumdihalogenalkyl ein Aluminiumalkyldichlorid oder ein Aluminiumalkyldibromid ist.

7. Zusammensetzung nach einem der Ansprüche 1 bis 5, in der das besagte Aluminiumdihalogenalkyl der Summenformel Al₂X₄R₂, entspricht, in der jedes X ein unter Chlor und Brom ausgesuchtes Halogen, jedes R einen Hydrocarbylrest mit 1 bis 12 Kohlenstoffatomen darstellt.

8. Zusammensetzung nach Anspruch 7, in der das Aluminiumdihalogenalkyl unter der Gruppe ausgesucht wird, die aus Dichlormethylaluminium, Dibrommethylaluminium, Dichlorethylaluminium, Dichlor n-hexylaluminium, Dichlorisobutylaluminium besteht.

9. Zusammensetzung nach einem der Ansprüche 1 bis 8, in der das besagte quartäre Ammoniumhalogenid ein quartäres Ammoniumchlorid oder -bromid und das besagte quartäre Phosphoniumhalogenid ein quartäres Phosphoniumchlorid oder -bromid ist.

10. Zusammensetzung nach einem der Ansprüche 1 bis 9, in der das besagte quartäre Ammoniumhalogenid und das besagte quartäre Phosphoniumhalogenid in der Gruppe ausgesucht werden, die aus Tetrabutylphosphoniumchlorid, Tetrabutylphosphoniumbromid, n-butylpyridiumchlorid, Ethylpyridiniumbromid, Methyl-1 butyl-3 imidazoliumchlorid, Methyl-1 ethyl-3 imidazoniumchlorid besteht.

11. Zusammensetzung nach einem der Ansprüche 1 bis 10, wobei das besagte Inkontaktbringen in Gegenwart eines gesättigten, alliphatischen, teerhaltigen Lösungsmittels erfolgt.

12. Zusammensetzung nach einem der Ansprüche 1 bis 11, in der die Katalysatoren auf Übergangsmetallkomplexen basieren.

13. Zusammensetzung nach einem der Ansprüche 1 bis 12, in der der Katalysator mindestens ein Nickelkomplex ist.

14. Zusammensetzung nach einem der Ansprüche 1 bis 13, wobei das besagte **Inkontaktbringen** mit zusätzlich einem Aluminiumtrihalogenid erfolgt.

15. Verfahren für die Dimerisierung, die Codimerisierung oder die Oligomerisierung von mindestens einem Olefin, in dem das besagte Olefin in Kontakt mit einer Zusammensetzung nach einem der Ansprüche 1 bis 14 gebracht wird.

16. Verfahren nach Anspruch 15, in dem die Zusammensetzung einen Katalysator enthält, der mindestens ein Nickelkomplex ist, wobei der besagte Komplex weder eine Nickel-Kohlenstoff- bindung noch eine Nickel-Wasserstoffbindung enthält.

17. Verfahren nach einem der Ansprüche 15 bis 16, in dem der besagte Nickelkomplex in der Gruppe ausgesucht wird, die vom Nickel-Acetylacetonat, dem Komplex (NiCl₂,2 Pyridin), dem Komplex (NiCl₂, 2PiPr₃), dem Komplex (NiBr₂, 2PBu₃), dem Komplex (NiSO4, 2PBu₃), dem Nickeloctoat, den Nickelalkoholaten, dem Biscyclooctaden-Nickel, dem Nickelmethallylnickel, dem Bisallylnickel, dem Allylnickelbromid, dem Allylnickelchlorid gedildet ist.

18. Verfahren nach einem der Ansprüche 15 und 17, in dem die in der besagten flüssigen Zusammensetzung enthaltene Menge an Nickelverbindung(en) zwischen 0,01 m Mol.1⁻¹ und 2 Mol.1⁻¹ liegt.

19. Verfahren nach einem der Ansprüche 15 bis 18, in dem das besagte Olefin unter Ethylen, Propylen, den Butenen-1 und -2 und Styrol ausgesucht wird.
